# EUROPEAN PATENT SPECIFICATION

(11) **EP 0 416 718 B1**
(45) Date of publication and mention of the grant of the patent: **29.03.1995**
(21) Application number: 90300740.9
(22) Date of filing: 24.01.1990
(51) Int. Cl.: A23L 1/22, A23F 3/14, A23F 5/46, C12C 5/02

(54) **Taste improver comprising tannin**
Tannin enthaltender Geschmacksverbesserer
Agent améliorant le goût contenant du tannin

(30) Priority: 08.09.1989 JP 234486/89; 18.10.1989 JP 271264/89
(43) Date of publication of application: 13.03.1991
(73) Proprietor: Asama Chemical Co., Ltd., Tokyo (JP); Izumitani, Maremitsu, Kokubunji-shi, Tokyo (JP); MAMIE CORPORATION, Tokyo (JP)
(72) Inventor: Izumitani, Maremitsu, Kokubunji-shi, Tokyo (JP); Nozaki, Kazuhiko, c/o Asama Chemical Co., Ltd., Tokyo (JP)
(74) Representative: W.P. THOMPSON & CO.

(56) References cited:
- DATABASE WPIL/DERWENT accession no. 77-42301Y (24),1977, Derwent Publications Ltd., London, GB; & JP - A- 52054058 (MEIJI SEIKA K.K.) 02.05.1977
- DATABASE WPIL/DERWENT accession no. 86-194599 (30),1986, Derwent Publications Ltd., London, GB; & JP - A- 61128861 (MITO KASHICHI SHOTE) 16.06.1986
- DATABASE WPIL/DERWENT accession no. 88-052541 (08),
- 1988, Derwent Publications Ltd., London, GB; & JP - A- 63007747 (LOTTE K.K.) 13.01.1988
- DATABASE WPIL/DERWENT accession no. 86-268761 (41),1986, Derwent Publications Ltd., London, GB; & JP - A- 61195683 (KATADA I) 29.08.1986
- DATABASE WPIL/DERWENT accession no. 87-004396 (01),1987, Derwent Publications Ltd., London, GB; & JP - A- 61265081 (KIRIN BREWERY K.K.) 22.11.1986
- DATABASE WPIL/DERWENT accession no. 80-32280C (18),1980, Derwent Publications Ltd., London, GB; & SU - A- 683707 (CANNING IND. RES. INS.) 15.09.1979
- DATABASE WPIL/DERWENT accession no. 90-252169 (33),Derwent Publications Ltd., London, GB; & SU - A- 1517903 (TSOTSIASHVILI M.I.) 30.10.1989

## Description

This invention relates to the use of tannin as a bitterness reducing additive in food. The present invention further relates to a sweetener composition comprising tannin and a low calorie sweetener.

Recent enrichment in eating habits elevates the level of consumers' requirement for "taste". Therefore it is desired to relieve or remove, bitterness, astringency and offensive odour or foods.

For example, citrus fruits contain various flavonoids including narigin and hesperidin known as bitterness ingredients. Thus jam or marmalade of citrus fruits has a bitterness to some extent. Although some people like an appropriate bitterness, it is expected that the consumption of these palatable juice and processed food products of citrus fruits can be further enhanced by relieving the bitterness.

When crystallized fruits or marmalade are to be produced from citrus nutsudaidai HAYATA having an intense bitterness, therefore, the citrus fruits are preliminarily treated with naringinase or washed with water for a long time so as to remove an excessive bitterness. However these pretreatments would restrict the productivity.

Furthermore, it is expected that the consumption of bitter drinks such as coffee or beer would be enlarged by relieving the bitterness.

In addition to these bitter foods, some foods such as oolong tea, black tea, Gymnema sylvestre R. Br., or green tea have characteristic astringency. It is also expected that the consumption of these products would be enhanced by relieving the astringency so as to give palatable foods.

Furthermore, some foods such as cheese or marine products have offensive odors. It is also expected that the consumption of these foods would be enlarged by relieving these offensive odors without deteriorating the inherent tastes thereof.

Thus it has been more and more required to develop food additives which can relieve, bitterness, astringency or offensive odor without deteriorating the inherent tastes of foods.

Database WIPL/Derwent no. 77-42301Y (24) discloses a food composition comprisiing cacoa nibs or mass (containing reducing sugar), the taste and flavour of which being improved by the addition of tannin-containing substance or tannin extract.

Database WIPL/Derwent no. 80-3228OC (18) discloses a food composition comprising coffee substitute made from cereals and chicory, the quality of which being improved by the addition of 10-20 % of tannin extract (containing 18-20 % of tannin).

Database WIPL/Derwent no. 87-004 396 (01) discloses a method which includes (a) contacting the starting solution for brewing wines (e.g. "sake", beer, wine, whiskey, etc.) with a solid substance selected from cellulose powder, Kieselguhr, active carbon, bone char, silica gel, protein fibre powder, Japanese acid clay. bentonite and tannin for at least 30 minutes and (b) brewing it with yeast as usual. By this method it is said that the formation or aromatic components (e.g. esters) in wines can be increased and the wines having good aroma, can be prepared.

Database WIPL/Derwent no. 86-268761 (41) relates to a method of masking the undesirable smell and sourness of food by adding extracted tannin, which can contain sugar, to food.

On the other hand, sweeteners such as steviaextract, glycyrrhizin, aspartame or saccharine, which are used to sweeten low-calorie drinks and processed foods, are disadvantageous in that they have a bitterness, an undesirable taste or a sustained sweet after-taste. Thus it has been required to overcome these disadvantages.

Under these circumstances, the present inventors have conducted extensive studies and consequently found out that the addition of a predetermined amount of tannin would relieve, for example, the bitterness etc. of a food or sweetener having a bitterness etc., thus achieving the present invention.

According to the present invention is the use of tannin in an a amount of from 0.001 to 5 parts by weight per 100 parts by weight of a foodstuff as a bitterness - reducing additive in a composition comprising the foodstuff. Preferably the foodstuff is a processed citrus, coffee, beer, ooling tea or chocolate. The tannin may be Kaki-shibu tannin (tannin of persimmom).

The food composition may further comprise a sweetner.

The invention also provides a sweetener composition which comprises 100 parts by weight of a low calorie sweetener and 0.01 to 1000 parts by weight of tannin.

Now the present invention will be described in detail.

The materials whose taste should be improved by the present invention include foods and sweeteners each having a bitterness.

Examples of the foods having a bitterness include caffeine drinks such as coffee, black tea and ooling tea, still beverages such as carbonated drinks and juices, vegetable drinks such as tomato juice, alcoholic drinks such as beer, medicinal wine and sake, confectionery such as chocolate and chewing gum, pickle, pickles such as salted vegetables, koji-zuke, nuka-zuke, vegetables preserved in vinegar and misco-zuke and seasonings such as soy sauce, miso, various sauces and vinegar.

Examples of the sweetener having a bitterness include artificial ones such as saccharin, sodium saccharin and aspartame, and extracted ones such as disodium glycyrrhizinate, trisodium glycyrrhizinate, D-xylose and stevioside (stevia extract).

In the present invention, the tannin may be present in the form of a tannin concentrate or a tannin powder of a purity of 100%.

In the present invention, the word "tannin" means an astringent substance commonly contained in, for example, the roots, stems, leaves, peels or fruits of plants.

Typical examples of tannin include persimmon tannin, chinese nutgall tannin, gallic tannin, tea-leaf tannin, wattle tannin, quebracho tannin, divi-divi tannin, myrobalan tannin and sumac tannin. Now each of these tannins will be briefly described.

### Kaki-shibu tannin (tannin of persimmon):

Tannin contained in green astringent persimmons. Green astringent persimmons are ground and sealed in a container together with water. After several days, the mixture is filtered. The supernatant thus obtained may be used as persimmon tannin juice. Alternately, water is added to the lees and the mixture is squeezed to thereby give persimmon tannin juice. The obtained persimmon tannin juice is generally stored under sealing for approximately six months prior to the use. A persimmon tannin powder may be obtained by powdering said persimmon tannin juice by, for example, spray drying, vacuum drying or freeze drying.

### Chinese tannin:

Tannin contained in a gall in Rhus javanica (family Anacardiaceae) formed by getting stung by Melaphis chinesis Bell A dry gall contains 50 to 70% by weight of tannin. It is available as a starting material for preparing drugs such as astringent, hemostat or catarrh remedy.

### nutgalls tannin:

Tannin contained in a gall formed in a young branch of family fagaceae formed through the oviposition of Cynips tinctoria Olivier. A dry gall contains approximately 70% by weight of gallic tannin. It is a crude drug and its application is nearly the same as that of chinese nutgall tannin.

### Tea-leaf tannin:

Tannin contained in tea leaves. Fresh dry tea leaves contain approximately 15 to 25% by weight of tannin, though the content varies depending on the variety and harvest time.

### Wattle tannin:

Tannin contained in the bark of an acacia Willd. of Family Fabaceae. A dry bark contains about 30% by weight of tannin.

### Quebracho tannin:

Tannin contained in the heart wood of quebracho (Anacardiaceae). A heart wood thereof contains approximately 20% by weight of tannin.

### Divi-divi tannin:

Tannin contained in divi-divi, a big tree of the family Leguminosae or family fabaceae. A dry fruits thereof contains approximately 20 % by weight of tannin.

### Myrobalan tannin:

Tannin contained in the fruit of myrobalan (family Combretaceae). A dry myrobalan fruit contains approximately 20 to 40% by weight (40 to 50% by weight in the sarcocarp) of tannin.

### Sumac tannin:

Tannin contained in the leaves of sumac (Anacardiaceae) and other plants belonging to the same genus. Fresh dry leaves therefore contain 13 to 26% by weight of tannin.

Each of these tannins may be extracted with, for example, water so as to give a tannin solution. Furthermore, this tannin solution may be powdered by, for example, spray drying, vacuum drying or freeze drying so as to give a tannin powder.

In addition to the above-mentioned tannin solution or tannin powder, the composition comprising a foodstuff may further contain, for example, mono-saccharides such as lactose, starch, wheat flour,proteins and dietary fibers such as peptite, cellilose and polydextrose. These additives would serve as so-called excipiens so as to facilitate the control of the amount of the taste improver when it is used at home.

In the present invention an appropriate amount of tannin is added to a food or a low calorie sweetener having a bitterness.

In the present invention, tannin is added to a food having a bitterness in an amount of 0.001 to 5 parts by weight based on 100 parts by weight of the food having a bitterness. When the amount of tannin does not fall within this range, the bitterness of the food cannot be sufficiently relieved or the astringency of the tannin per se rather deteriorates the taste of the food. It has been found that the addition of tannin even at a level lower than the threshold value of the astringency can be effective.

In the present invention, it is preferable to select the amount of tannin to be added within the range specified above, depending on each food.

Tannin may be added in an appropriate manner depending on the production process or form of the food having a bitterness.

The use of tannin as a bitterness-reducing additive in typical foods having a bitterness will now be described in more detail. In each case, the amount of tannin is expressed in parts by weight, assuming the purity of the added tannin as 100%. The food to which tannin is to be added has a common concentration. The term "common concentration" used herein means the one specified in "Fourth Revised Standard composition table of food in Japan" edited by Science and Technology Agency, published by Kagawa Nutrition College (1984).

### [1] Caffeine drink

The tastes of caffeine drinks such as coffee, cocoa, black tea and green tea can be improved in the following manner.

### (1) Coffee

Not only liquid coffee contained in a can or a bottle, but also powdery one, i.e., so-called instant coffee, coffee beans and milled coffee beans may be treated by the process of the present invention. In order to improve its taste, tannin may be added generally in an amount of 0.01 to 0.2 part by weight based on 100 parts by weight of the coffee. When the amount of tannin is less than 0.01 part by weight, the addition cannot exert any sufficient effect. When it exceeds 0.2 part by weight, on the other hand, the astringency of tannin per se becomes noticeable. Thus it is preferable to add 0.01 to 0.1 part by weight of tannin.

Tannin may be added in any manner, so long as the coffee drink finally contains tannin. In the case of canned coffee, for example, tannin may be preliminarily added to the coffee. Alternately, tannin may be added to the coffee together with sugar or a sweetener before drinking.

In the tannin-containing coffee thus obtained, the characteristic bitterness is relieved and thus it is palatable and shows a mild and excellent taste.

### (2) Tea

In order to improve the taste of tea such as green tea, black tea, oolong tea, roasted barley tea roasted Job's tears tea, Gynostemma pentaphyllum Makino or Gymnema Sylvestre R. Br., tannin may be added generally in an amount of 0.004 to 1 part by weight based on 100 parts by weight of the tea. When the amount of tannin is less than 0.004 part by weight, the addition cannot exert any sufficient effect. When it exceeds 1 part by weight, on the other hand, the astringency of tannin per se becomes noticeable. It is preferable to add 0.01 to 0.5 part by weight of tannin.

In the tannin-containing tea thus obtained, the characteristic bitterness and astringency are relieved and thus it is palatable and shows a mild and excellent taste.

In the case of oolong tea, tannin may be added in an amount of 0.004 to 1 part by weight based on 100 parts by weight of the oolong tea.

### (3) Cocoa

In order to improve the taste of cocoa, tannin may be added generally in an amount of 0.001 to 1 part by weight based on 100 parts by weight of the cocoa. When the amount of tannin is less than 0.001 part by weight, the addition cannot exert any sufficient effect. When it exceeds 1 part by weight, on the other hand, the astringency of tannin per se becomes noticeable. It is preferable to add 0.05 to 0.5 part by weight of tannin.

### [2] Refreshing drink

### (1) Carbonated drink

In order to improve the taste of a carbonated drink such as cola or pop, tannin may be added generally in an amount of 0.001 to 0.2 part by weight based on 100 parts by weight of the drink. When the amount of tannin is less than 0.001 part by weight, the addition cannot exert and sufficient effect. When it exceeds 0.2 part by weight, on the other hand, the astringency of tannin per se becomes noticeable. It is preferable to add 0.01 to 0.1 part by weight of tannin.

### (2) Powdery refreshing drink

In order to improve the taste of a powdery refreshing drink, tannin may be added generally in an amount of 0.005 to 0.1 part by weight based on 100 parts by weight of the drink. When the amount of tannin is less than 0.004 part by weight, the addition cannot exert any sufficient effect. When it exceeds 0.1 part by weight, on the other hand, the astringency of tannin per se becomes noticeable. It is preferable to add 0.01 to 0.1 part by weight of tannin.

In the tannin-containing refreshing drink thus obtained, the characteristic bitterness is relieved. Thus it has a refreshing taste.

### [3] Alcoholic drink

The taste of an alcoholic drink such as beer or medicinal wine may be improved in the following manner.

### (1) Beer

Tannin may be added to beer generally in an amount of 0.005 to 0.5 part by weight based on 100 parts by weight of the beer. When the amount of tannin is less than 0.005 part by weight, the addition cannot exert any sufficient effect. When it exceeds 0.5 part by weight, on the other hand, the astringency of tannin per se becomes noticeable. It is preferable to add 0.01 to 0.1 part by weight of tannin.

In the tannin-containing beer thus obtained, the characteristic bitterness is relieved. Thus it has an improved taste including body and dry feel.

### (2) Medicinal wine

Tannin may be added to a medicinal wine generally in an amount of 0.005 to 1 part by weight based on 100 parts by weight of the wine. When the amount of tannin is less than 0.005 part by weight, the addition cannot exert any sufficient effect. When it exceeds 1 part by weight, on the other hand, the astringency of tannin per se becomes noticeable. It is preferable to add 0.01 to 0.5 part by weight of tannin.

In the tannin-containing medicinal wine thus obtained, not only the bitterness but also the offensive herby odor are considerably relieved.

### [4] Confectionery

The taste of confectionery such as chocolate or chewing gum may be improved in the following manner.

### (1) Chocolate

Tannin may be added to chocolate generally in an amount of 0.01 to 1 part by weight based on 100 parts by weight of the chocolate. When the amount of tannin is less than 0.01 part by weight, the addition cannot exert any sufficient effect. When it exceeds 1 part by weight, on the other hand, the astringency of tannin per se becomes noticeable. It is preferable to add 0.05 to 0.5 part by weight of tannin.

Tannin may be added to chocolate at the same time with other materials such as cacao mass, sugar, cocoa butter and butter oil.

In the tannin-containing chocolate thus obtained, the characteristic bitterness are relieved. Thus it has an improved and thick taste.

### (2) Chewing gum

Tannin may be added to chewing gum generally in an amount of 0.001 to 0.5 part by weight based on 100 parts by weight of the gum. When the amount of tannin is less than 0.001 part by weight, the addition cannot exert any sufficient effect. When it exceeds 0.5 part by weight, on the other hand, the astringency of tannin per se becomes noticeable. It is preferable to add 0.05 to 0.1 part by weight of tannin.

Tannin may be added to chewing gum at the same time with other materials such as colorant, emulsifier and sugar to the gum base.

In the tannin-containing chewing gum thus obtained, the characteristic bitterness is relieved. Further, it has a fresh odor of perfumes.

### [5] Processed fruit product

The taste of a processed fruit product, for example, fruit juice such as orange, grape, apple or grapefruit juice, citrus fruit jam or marmalade or a fruit preserved in sugar or fruit juice may be improved in the following manner.

### (1) Fruit juice

In order to improve the taste of a fruit juice, tannin may be added to the fruit juice generally in an amount of 0.001 to 1 part by weight, preferably 0.005 to 0.5 part by weight, based on 100 parts by weight of the fruit juice. When the amount of tannin is less than 0.001 part by weight, the addition cannot exert any sufficient effect. When it exceeds 1 part by weight, on the other hand, the astringency of tannin per se becomes noticeable. It is preferable to add 0.01 to 0.5 part by weight of tannin.

Tannin may be added to the fruit juice by an arbitrary method without limitation, so long as the fruit juice finally contains tannin.

In the tannin-containing fruit juice thus obtained, the characteristic bitterness of, for example, citrus fruits is relieved. Further, it is palatable and has a refreshing taste.

In the case of citrus fruits, in particular, tannin is preferably added in an amount of 0.005 to 1.0 part by weight based on 100 parts by weight of the fruits. In the tannin-containing citrus fruit juice thus obtained, the characteristic bitterness is relieved. Thus it is palatable and has a refreshing taste.

### (2) Processed fruit products such as jam or marmalade

In order to improve the taste of a jam or a marmalade, tannin may be added generally in an amount of 0.05 to 5 parts by weight based on 100 parts by weight of the fruits to be used. When the amount of tannin is less than 0.05 part by weight, the addition cannot exert any sufficient effect. When it exceeds 5 parts by weight, on the other hand, the astringency of tannin per se becomes noticeable. It is preferable to add 0.1 to 1 part by weight of tannin.

In the case of a Citrus natsudaidai HAYATA marmalade, in particular, it is preferable to add 0.1 to 0.8 part by weight of tannin per 100 parts by weight of the fruit to be used.

Tannin may be preferably added in cooking the fruits.

In the tannin-containing jam or marmalade thus obtained, the characteristic bitterness is relieved. Thus it is palatable and has a refreshing taste.

### (3) Fruit preserved in sugar or juice

In order to improve the taste of a processed fruit products prepared by preserving fruits in sugar, syrup, fruit juice or fruit sauce, tannin may generally be added in an amount of 0.01 to 5 parts by weight based on 100 parts by weight of the natural fruits to be used. When the amount of tannin is less than 0.01 part by weight, the addition cannot exert any sufficient effect. When it exceeds 5 parts by weight, on the other hand, the astringency of tannin per se becomes noticeable. It is preferable to add 0.05 to 1 part by weight of tannin.

Tannin may be added by mixing it with the syrup, fruit juice or sugar solution.

In the case of citrus fruits, in particular, tannin is preferably added in an amount of 0.01 to 0.1 part by weight based on 100 parts by weight of the natural citrus fruits, similar to the case of the above-mentioned fruit juice.

In the tannin-containing fruits preserved in sugar or fruit juice thus obtained, the characteristic bitterness is relieved. Thus it is palatable and has a refreshing taste.

### [6] Vegetable juice

In order to improve the taste of a vegetable juice such as tomato juice, tannin may generally be added in an amount of 0.005 to 0.5 part by weight based on 100 parts by weight of the vegetables to be used. When the amount of tannin is less than 0.005 part by weight, the addition cannot exert any sufficient effect. When it exceeds 0.5 part by weight, on the other hand, the astringency of tannin per se becomes noticeable. It is preferable to add 0.01 to 0.3 part by weight of tannin.

In the tannin-containing vegetable juice thus obtained, the bitterness is relieved.

### [7] Pickled Vegetables

In order to improve the taste of picked vegetables such as salted vegetables, koji-zuke, vegetables pickled in soy sauce, nuka-zuke, karashi-zuke, vegetables pickled in vinegar and miso-zuke, tannin may generally be added in an amount of 0.01 to 5 parts by weight based on 100 parts by weight of the vegetables to be used. When the amount of tannin is less than 0.01 part by weight, the addition cannot exert any sufficient effect. When it exceeds 5 parts by weight, on the other hand, the astringency of tannin per se becomes noticeable. It is preferable to add 0.1 to 1 part by weight of tannin.

The taste of these pickles may be improved merely by adding tannin to the pickling solution or paste.

In the tannin-containing pickles thus obtained, not only the bitterness but also the offensive odor and undesirable taste are relived, which makes them palatable for everyone.

### (8) Seasoning

The taste of a seasoning such as soy sauce, miso, vinegar or sauce may be improved in the following manner.

Tannin may generally be added in an amount of 0.001 to 0.1 part by weight based on 100 parts by weight of the seasoning. When the amount of tannin is less than 0.001 part by weight, the addition cannot exert any sufficient effect. When it exceeds 0.1 part by weight, on the other hand, the astringency of tannin per se becomes noticeable. It is preferable to add 0.005 to 0.08 part by weight of tannin.

In the tannin-containing seasoning thus obtained, the characteristic bitterness and sourness are relieved.

### (9) Tofu product

The taste of tofu or soybean curd or a processed tofu product such as abura-age may be improved in the following manner.

Tannin may generally be added to tofu or a tofu product in an amount of 0.05 to 1 part by weight based on 100 parts by weight of the tofu. When the amount of tannin is less than 0.05 part by weight, the addition cannot exert any sufficient effect. When it exceeds 1 part by weight, on the other hand, the astringency of tannin per se becomes noticeable. It is preferable to add 0.08 to 0.5 part by weight of tannin.

In the tannin-containing tofu product thus obtained, the taste characteristic to "nigari" (bittern) is relieved, which makes it highly palatable.

In the present invention, the taste of a sweetener to be improved includes a bitterness. More particularly, it includes a bitterness, an after-taste and an undesirable taste of a sweetener.

As described above, examples of a sweetener having a bitterness etc. include synthetic sweeteners such as saccharin sodium, saccharin and aspartame and extracted ones such as disodium glycyrrhizinate, trisodium glycyrrhizinate, D-xylose and stevioside (stevia extract).

In order to improve the taste of a sweetener having a bitterness etc., tannin may generally be added in an amount of 0.1 to 1000 parts by weight based on 100 parts by weight of the sweetener. When the amount of tannin is less than 0.1 part by weight, the addition cannot exert any sufficient effect. When it exceeds 1000 parts by weight, on the other hand, the astringency of tannin per se becomes noticeable. It is preferable to add 1 to 700 parts by weight of tannin.

In the present invention, it is preferable to select the amount of tannin according to each sweetener within the range specified above.

More particularly, preferably 10 to 700 parts by weight of tannin is added to 100 parts by weight of saccharin.

Preferably 10 to 700 parts by weight of tannin is added to 100 parts by weight of saccharin sodium.

Preferably 10 to 300 parts by weight of tannin is added to 100 parts by weight of aspartame.

Preferably 10 to 500 parts by weight of tannin is added to 100 parts by weight of disodium glycyrrhizinate.

Preferably 10 to 500 parts by weight of tannin is added to 100 parts by weight of trisodium glycyrrhizinate.

Preferably 1 to 50 parts by weight of tannin is added to 100 parts by weight of D-xylose.

Preferably 10 to 700 parts by weight of tannin is added to 100 parts by weight of stevioside.

Tannin may be added to a sweetener by various methods, for example, (A) preliminarily mixing a powdery sweetener with a tannin powder; (B) adding tannin simultaneously with a sweetener to a food; or (C) adding tannin to a food to which a sweetener has been added.

The addition of tannin relieves the bitterness, after-taste or undesirable taste of the sweetener. Thus the sweetener acquires a refreshing sweetness.

### [Examples]

The present invention is further illustrated by the following Examples.

### Example 1

Commercially available roasted coffee beans (Colombia) were milled in a coffee mill and extracted with hot water in a coffee drip so as to give a coffee.

The coffee thus obtained was divided into two portions. To one portion was added 0.07 part by weight of persimmon tannin per 100 parts by weight of the coffee, while nothing was added to the remaining portion.

The aroma, bitterness, astringency and mildness of each of these coffees were organoleptically evaluated by 10 panelists.

Table 1 shows the preference of the panelists.

**Table 1**

| Item | Aroma | Bitterness and astringency | Mildness |
|---|---|---|---|
| persimmon tannin added | 8 | 9 | 9 |
| no persimmon tannin added | 2 | 1 | 1 |

As Table 1 indicates, most of the 10 panelists preferred the tannin-containing coffee in respect of each quality, namely, aroma, bitterness and astringency, and mildness. These results show that the addition of the persimmon tannin considerably improves the aroma, bitterness, astringency and mildness of coffee.

### Example 2

Naringin, which is a bitterness component contained in citrus fruits, was dissolved in a 10% by weight aqueous solution of sucrose to thereby give a concentration of 0.02% by weight. To 100 parts by weight of the solution thus obtained was added persimmon tannin in amounts specified in Table 2. Then the bitterness of each solution thus obtained was organoleptically evaluated by 10 panelists. For comparison, a solution free from any persimmon tannin was similarly evaluated.

The evaluation on bitterness was conducted according to the following criteria.
- ⓞ :: hardly bitter.
- ○ :: slightly bitter.
- △ :: considerably bitter.
- X :: extremely bitter.

Table 2 shows the number of panelists who voted for each criterium.

**Table 2**

| Amount of added persimmon tannin (pt. wt.) | Evaluation of bitterness | | | |
|---|---|---|---|---|
| | ⓞ | ○ | △ | X |
| 0 | - | - | - | 10 |
| 0.001 | 1 | 5 | 3 | 1 |
| 0.005 | 3 | 4 | 3 | - |
| 0.01 | 5 | 5 | - | - |
| 0.05 | 8 | 1 | 1 | - |
| 0.1 | 9 | 1 | - | - |
| 0.5 | 10 | - | - | - |
| 1.0 | 10 | - | - | - |
| 2.0 * | - | - | - | - |

As Table 2 obviously indicates, the addition of 0.001 to 1 part by weight of tannin relieves the bitterness characteristic of citrus fruits. When the amount of tannin was increased to 2 parts by weight, however, the astringency of tannin per se became noticeable.

### Example 3

1 kg of Citrus natsudaidai HAYATA was divided into peel and sarcocarp. The peel was washed with water to thereby remove contaminants and then cut into pieces. On the other hand, the sarcocarp was squeezed to thereby give a juice.

To the peel pieces and juice thus obtained were added 500 g of water and 5 g of persimmon tannin. The mixture was heated under stirring and then 1 kg of sugar was added thereto. Subseqeuntly, it was concentrated by heating so as to give a marmalade.

For comparison, the above procedure was repeated except that no persimmon tannin was used.

These marmalades were subjected to the same organoleptic evaluation as the one described in Example 2. As a result, it was found that the persimmon tannin-containing marmalade showed a considerably relieved bitterness compared with the persimmon tannin-free one.

### Example 4

A grapefruit was cut into two pieces and then squeezed with hands to thereby give a fresh juice. To 100 parts by weight of the juice thus obtained was added 0.1 part by weight of persimmon tannin so as to give a grapefruit juice. Further, the above procedure was repeated except that the grapefruit was replaced with lemons and that 0.15 part by weight of persimmon tannin was added to thereby give a lemon juice.

The persimmon tannin-containing grapefruit juice and persimmon tannin-containing lemon juice thus obtained as well as those free from persimmon tannin were organoleptically evaluated by 10 panelists so as to examine the extent of bitterness.

As a result, seven panelists among ten felt the persimmon tannin-free grapefruit juice bitter, while none felt the persimmon tannin-containing grapefruit juice according to the present invention bitter.

All panelists felt the persimmon tannin-free lemon juice bitter, while none felt the persimmon tannin-containing lemon juice bitter. Furthermore, all panelists preferred the persimmon tannin-containing lemon juice to the persimmon tannin-free one, since the former had a refreshing sourness.

### Example 5

10 g of dried oolong tea leaves were added to 1 ℓ of boiling water and cooked therein for one minute. After filtering, an oolong tea was obtained. To 200 ml of the oolong tea thus obtained was added 0.08 g of persimmon tannin.

The persimmon tannin-containing oolong tea and a comparative one free from persimmon tannin were organoleptically evaluated. As a result, it was found that the persimmon tannin-containing oolong tea had a less astringent and excellent taste as compared with the persimmon tannin-free one.

### Example 6

To 100 parts by weight of a commercially available lager beer was added 0.1 part by weight of persimmon tannin.

The extent of bitterness, after-taste, dry feel and body of the persimmon tannin-containing beer thus obtained as well as those of a persimmon tannin-free one were organoleptically evaluated by 10 panelists.

Table 3 shows the preference of the panelists in respect of each quality.

**Table 3**

| Item | Bitterness | After-taste | Dry feel | Body |
|---|---|---|---|---|
| persimmon tannin added | 8 | 8 | 9 | 7 |
| no persimmon tannin added | 2 | 2 | 1 | 3 |

As Table 3 indicates, the addition of the persimmon tannin improves the bitterness, aftertaste, dry feel and body of beer.

### Example 7

To 100.7 parts by weight of a milk chocolate of the following composition was added persimmon tannin in an amount specified in Table 5 to thereby give a chocolate product.

| | |
|---|---|
| cacao mass | 24 parts by weight |
| sugar | 50 parts by weight |
| cocoa butter | 16 parts by weight |
| butter oil | 4 parts by weight |
| skim milk powder | 6 parts by weight |
| lecithin | 0.3 part by weight |
| sucrose fatty acid ester | 0.4 part by weight. |

To 100.7 parts by weight of a bitter chocolate of the following composition was added persimmon tannin in an amount specified in Table 5 to thereby give a chocolate product.

| | |
|---|---|
| cacao mass | 30 parts by weight |
| sugar | 50 parts by weight |
| cocoa butter | 16 parts by weight |
| butter oil | 4 parts by weight |
| lecithin | 0.3 part by weight |
| sucrose fatty acid ester | 0.4 part by weight. |

Changes in the tastes of these chocolate products were organoleptically evaluated by 10 panelists. For comparison, persimmon tannin-free milk and bitter chocolate products were also organoleptically evaluated.

The evaluation of the taste was conducted according to the following criteria:
- ⓞ :: bitter body and mild after-taste.
- ○ :: good after-taste and mild sweetness.
- △ :: slightly bitter.
- X :: considerably astringent.
- ● :: no change.

Tables 5 and 6 show the number of panelists who voted for each of the criteria.

**Table 5**

| Amount of added persimmon tannin (pt. wt.) | Evaluation on bitterness (milk chocolate) | | | | |
|---|---|---|---|---|---|
| | ⓞ | ○ | △ | X | ● |
| 0 | - | - | - | - | 10 |
| 0.01 | - | 3 | - | - | 7 |
| 0.05 | - | 5 | - | - | 5 |
| 0.1 | - | 8 | - | - | 2 |
| 0.3 | 3 | 7 | - | - | - |
| 0.5 | 5 | 5 | - | - | - |
| 0.7 | 5 | 4 | 1 | - | - |
| 1.0 | 2 | 1 | 6 | 1 | - |
| 1.3 | 1 | - | 5 | 4 | - |
| 1.5 | - | - | 2 | 8 | - |
| 2.0 | - | - | - | 10 | - |

**Table 6**

| Amount of added persimmon tannin (pt. wt.) | Evaluation on bitterness (bitter chocolate) | | | | |
|---|---|---|---|---|---|
| | ⓞ | ○ | △ | X | ● |
| 0 | - | - | - | - | 10 |
| 0.01 | - | 8 | - | - | 2 |
| 0.05 | 2 | 6 | - | - | 2 |
| 0.1 | 5 | 4 | - | - | 1 |
| 0.3 | 8 | 2 | - | - | - |
| 0.5 | 10 | - | - | - | - |
| 0.7 | 9 | 1 | - | - | - |
| 1.0 | 3 | 2 | 1 | 4 | - |
| 1.3 | - | - | 2 | 8 | - |
| 1.5 | - | - | - | 10 | - |
| 2.0 | - | - | - | 10 | - |

As Tables 5 and 6 indicates, the addition of 0.01 to 1 part by weight of the persimmon tannin enhances the body, refreshing bitterness and mild sweetness of the chocolate without giving any undesirable after-taste. Thus the preferable bitterness of the chocolate became remarkable. When the amount of the persimmon tannin was increased to 1.3 part by weight, however, the astringency of the persimmon tannin per se became noticeable.

### Example 8

0.01 g of each of a stevia extract (stevioside), glycyrrhizin, aspartame and saccharin were separately dissolved each in 100 ml of water. To 100 parts by weight of each solution thus obtained was added persimmon tannin in an amount specified in Table 7. Then the bitterness, undesirable taste and after-taste of each solution were organoleptically evaluated.

For comparison, persimmon tannin-free samples were also organoleptically evaluated.

The evaluation was conducted by five panelists. When three or more panelists among five gave the same answer, their evaluation was adopted.

The bitterness, undesirable taste and after-taste were evaluated according to the following criteria:
- X :: intense bitterness, undesirable taste and after-taste.
- △ :: considerable bitterness, undesirable taste and after-taste.
- ○ :: slight bitterness, undesirable taste and after-taste.
- ⓞ :: scarcely any bitterness, undesirable taste or after-taste.

Table 7 shows the results.

**Table 7**

| Amount of added persimmon tannin (pt. wt.) | Sweetener | | | |
|---|---|---|---|---|
| | stevioside | glycyrrhizin | aspartame | saccharin |
| 0 | X | X | X | X |
| 0.001 | ○ | ○ | ○ | ○ |
| 0.005 | ○ | ○ | ○ | ○ |
| 0.01 | ○ | ○ | ○ | ○ |
| 0.03 | ○ | ○ | ⓞ | ○ |
| 0.05 | ○ | ⓞ | ⓞ | ○ |
| 0.07 | ⓞ | ⓞ | ⓞ | ⓞ |
| 0.1 | ⓞ | ⓞ | ⓞ | ⓞ |
| 0.2 * | - | - | - | - |

As Table 7 indicates, the addition of 0.001 to 0.1 part by weight of persimmon tannin relieved the bitterness characteristic to each sweetener. When the amount of the persimmon tannin was increased to 0.2 part by weight, however, the astringency of the persimmon tannin per se became noticeable.

### Example 9

0.015 g of each of the stevia extract (stevioside), glycyrrhizin, aspartame and saccharin employed in Example 11 were separately dissolved each in 100 ml of coffee.
To 100 parts by weight of the sweetner-containing coffee thus obtained was added persimmon tannin in an amount specified in Table 8. Then the bitterness, undesirable taste and after-taste of the coffee were evaluated according to the same criteria as those described in Example 11.

For comparison, samples free from persimmon tannin were also organoleptically evaluated.

Table 8 shows the results.

**Table 8**

| Amount of added persimmon tannin (pt. wt.) | Sweetener | | | |
|---|---|---|---|---|
| | stevioside | glycyrrhizin | aspartame | saccharin |
| 0 | X | X | X | X |
| 0.001 | ○ | ○ | ○ | ○ |
| 0.005 | ○ | ○ | ○ | ○ |
| 0.01 | ○ | ○ | ○ | ○ |
| 0.03 | ○ | ○ | ○ | ○ |
| 0.05 | ○ | ○ | ○ | ○ |
| 0.07 | ○ | ○ | ⓞ | ○ |
| 0.1 | ○ | ⓞ | ⓞ | ⓞ |
| 0.15 | ⓞ | ⓞ | ⓞ | ⓞ |
| 0.3 * | - | - | - | - |

As Table 8 indicates, the addition of 0.001 to 0.15 part by weight of the persimmon tannin relieved the bitterness characteristic to each sweetener. When the amount of the persimmon tannin was increased to 0.3 part by weight, however, the astringency of the persimmon tannin per se became noticeable.

### Example 10

150 g of black soybeans were immersed in 800 ml of water and allowed to stand for 10 hours. Then these beans were slowly cooked together with the immersing water for approximately three hours until the beans became soft. Next, a stevia extract (stevioside), glycyrrhizin and aspartame were added thereto each in an amount specified in Table 9. Further 15 ml of soy sauce containing 0.2 g of persimmon tannin was added thereto. After allowing to stand overnight, the beans were further cooked until the amount of the water was decreased to approximately 2/3.

The bitterness, undesirable taste and after-taste of the beans thus cooked were organoleptically evaluated.

For comparison, the above procedure was repeated except that the sweetener was replaced with 120 g of sugar. The product was also organoleptically evaluated.

The bitterness, undesirable taste and after-taste of the cooked beans were evaluated according to the following criteria:
- ○ :: no bitterness, undesirable taste nor after-taste.
- △ :: scarcely any bitterness, undesirable taste nor after-taste.
- X :: slight bitterness, undesirable taste and after-taste.

Table 9 shows the results.

**Table 9**

| Sweetener | Amount of addition (g) | Bitterness, undesirable taste and after-taste |
|---|---|---|
| stevioside | 0.5 | △ |
| glycyrrhizin | 0.5 | △ |
| aspartame | 0.6 | ○ |
| sugar | 120 | ○ |

As Table 9 indicates, the persimmon tannin-containing cooked beans had scarcely any bitterness, undesirable taste or after-taste. Thus it was found that the persimmon tannin exerts an improving effect on the taste of cooked products.

### Example 11

Commercially available roasted coffee beans (Kilimanjaro) were milled in a coffee mill and extracted with hot water in a coffee drip to thereby give a coffee.

The coffee thus obtained was divided into five portions. To 100 parts by weight of four of these coffee portions were added 0.07 part by weight respectively of persimmon tannin, Chinese nutgall tannin, gallic tannin and tea leaf tannin. Nothing was added to the fifth portion.

The aroma, bitterness and astringency and mildness of each coffee portion thus obtained were organoleptically evaluated by ten panelists.

Table 10 shows the number of panelists giving a positive preference in respect of each portion.

**Table 10**

| Item | Aroma | Bitterness and astringency | Mildness |
|---|---|---|---|
| persimmon tannin added | 8 | 9 | 9 |
| chinese nutgall tannin added | 9 | 8 | 8 |
| gallic gannin added | 9 | 9 | 8 |
| tea leaf tannin added | 8 | 9 | 8 |
| none | 2 | 1 | 1 |

As Table 10 indicates, most of the panelists felt the coffees containing various kinds of tannin to be excellent in aroma, bitterness and stringency, and mildness. Thus the addition of tannin considerably improves the aroma, bitterness, astringency and mildness of coffee.

As described above in detail, the present invention is effective in the improvement of a food or a sweetener having a bitterness.

Further, it is possible to relieve the bitterness of a food and to make a masked taste thereof remarkable by appropriately selecting the amount of tannin to be added to the food.

These tannin-containing foods thus obtained, which have relieved bitterness and improved taste, can satisfy a larger number of consumers.

## Claims

1. The use of tannin in an amount of from 0.001 to 5 parts by weight per 100 parts by weight of a foodstuff as a bitterness-reducing additive in a composition comprising the foodstuff.

2. The use as claimed in claim 1, characterised in that the composition also comprises a sweetener.

3. The use as claimed in claim 2, characterised in that the composition contains from 0.1 to 1000 parts by weight of tannin per 100 parts by weight of sweetener.

4. The use as claimed in any of claims 1 to 3, characterised in that the tannin is Kaki-shibu tannin (tannin of persimmon).

5. A sweetener composition having an improved taste, characterised in that it comprises a low-calorie sweetener and from 0.1 to 1000 parts by weight of tannin for each 100 parts by weight of the low-calorie sweetener.

6. A composition comprising a foodstuff and the sweetener composition claimed in claim 5.

## Patentansprüche

1. Verwendung von Tannin in einer Menge von 0,001 bis 5 Gewichtsteilen auf 100 Gewichtsteile eines Nahrungsmittels als Additiv zum Reduzieren von Bitterkeit in einer Zusammensetzung, die das Nahrungsmittel enthält.

2. Verwendung nach Anspruch 1, dadurch gekennzeichnet, daß die Zusammensetzung auch ein Süßungsmittel enthält.

3. Verwendung nach Anspruch 2, dadurch gekennzeichnet, daß die Zusammensetzung von 0,1 bis 1000 Gewichtsteilen Tannin auf 100 Gewichtsteile Süßungsmittel enthält.

4. Verwendung nach einem der Ansprüche 1 bis 3, dadurch gekennzeichnet, daß das Tannin Kaki-shibu-Tannin (Persimmontannin) ist.

5. Süßungsmittelzusammensetzung mit einem verbesserten Geschmack, dadurch gekennzeichnet, daß sie ein kalorienarmes Süßungsmittel und von 0,1 bis 1000 Gewichtsteilen Tannin auf jeweils 100 Gewichtsteile des kalorienarmen Süßungsmittels umfaßt.

6. Zusammensetzung umfassend ein Nahrungsmittel und die Süßungsmittelzusammensetzung nach Anspruch 5.

## Revendications

1. Utilisation de tanin, dans une proportion de 0,001 à 5 parties en poids, pour 100 parties en poids d'une denrée alimentaire, comme additif réduisant l'amertume dans une composition comprenant la denrée alimentaire.

2. Utilisation selon la revendication 1, caractérisée en ce que la composition comprend aussi un édulcorant.

3. Utilisation selon la revendication 2, caractérisée en ce que la composition contient de 0,1 à 1 000 parties en poids de tanin, pour 100 parties en poids d'édulcorant.

4. Utilisation selon l'une quelconque des revendications 1 à 3, caractérisée en ce que le tanin est le tanin de plaqueminier kaki (tanin de plaquemine).

5. Composition édulcorante ayant une saveur améliorée, caractérisée en ce qu'elle comprend un édulcorant basses calories et de 0,1 à 1 000 parties en poids de tanin, pour 100 parties en poids d'édulcorant basses calories.

6. Composition comprenant une denrée alimentaire et la composition d'édulcorant selon la revendication 5.
